# EUROPEAN PATENT APPLICATION

(11) **EP 4 693 788 A1**
(43) Date of publication of application: **11.02.2026**
(21) Application number: 25190018.9
(22) Date of filing: 16.07.2025
(51) Int. Cl.: H02J 1/10, G06F 1/28, H02M 1/32

(54) **POWER SUPPLY SYSTEM**

(30) Priority: 07.08.2024 JP 2024130939
(71) Applicant: Mitsumi Electric Co., Ltd., Tama-Shi, Tokyo 206-8567 (JP)
(72) Inventor: OHARA, Tomomitsu, Tama-shi, 206-8567 (JP)
(74) Representative: Regimbeau

(57) **Abstract**

A power supply system includes power supplies that generate output voltages in response to control signals in an active state, respectively, a control device that outputs the control signals to the power supplies, respectively, and an abnormality transmission circuit including abnormal voltage detection circuits provided in correspondence with the power supplies, that detects whether or not the output voltages generated by the power supplies include an abnormality. The abnormality transmission circuit transmits detection results of the abnormal voltage detection circuits to the control device as serial data, and the control device outputs a control signal in an inactive state to a power supply in which the abnormality is detected among the power supplies, based on the detection results, to stop an operation of the power supply, and thereafter output a control signal in an active state to the power supply.

## Description

### FIELD

The present invention relates to power supply systems.

### BACKGROUND

In a power supply that generates a plurality of types of power supply voltages or a plurality of power supplies that generate a plurality of types of power supply voltages, respectively, there is a known technique in which a voltage abnormality detection circuit that detects an abnormality in a power supply voltage and a current abnormality detection circuit that detects an abnormality in a power supply current are provided for each type of power supply voltage of the plurality of types of power supply voltages.

Japanese Laid-Open Patent Publication No. 2001-312318 is an example of related art.

For example, in a case where a control device that controls a plurality of power supplies detects an abnormality in the power supply voltage or the power supply current for each power supply and stops the power supply in which the abnormality occurred, the control device needs to receive a notification of the abnormality in the power supply voltage and a notification of the abnormality in the power supply current from each power supply. In this case, a plurality of signal lines for notifying the abnormality needs to be provided between the plurality of power supplies and the control device. For this reason, a circuit scale of a power supply system including the plurality of power supplies and the control device becomes large, thereby increasing a cost of the power supply system.

### SUMMARY

One object according to an aspect of the present disclosure is to provide a function of detecting a power supply abnormality of a plurality of power supplies and a function of safely stopping a power supply in which an abnormality occurred, while suppressing an increase in the circuit scale.

According to an aspect of the present disclosure, a power supply system includes a plurality of power supplies configured to generate output voltages in response to a plurality of control signals in an active state, respectively; a control device configured to output the plurality of control signals to the plurality of power supplies, respectively; and an abnormality transmission circuit including a plurality of abnormal voltage detection circuits provided in correspondence with the plurality of power supplies, and configured to detect whether or not the output voltages generated by the plurality of power supplies include an abnormality, wherein the abnormality transmission circuit transmits a plurality of detection results of the plurality of abnormal voltage detection circuits to the control device as serial data, and the control device outputs a control signal in an inactive state to a power supply in which the abnormality is detected among the plurality of power supplies, based on the plurality of detection results, to stop an operation of the power supply, and thereafter output a control signal in an active state to the power supply.

The object and advantages of the invention will be realized and attained by means of the elements and combinations particularly pointed out in the claims.

It is to be understood that both the foregoing general description and the following detailed description are exemplary and explanatory and are not restrictive of the invention, as claimed.

### BRIEF DESCRIPTION OF THE DRAWINGS

FIG. 1 is an example of a block diagram illustrating a first embodiment of a power supply system according to the present invention;
FIG. 2 is an example of a block diagram illustrating an outline of the power supply illustrated in FIG. 1;
FIG. 3 is a circuit diagram illustrating a specific example of the power supply illustrated in FIG. 2;
FIG. 4 is a timing chart illustrating an operation example of the power supply illustrated in FIG. 3;
FIG. 5 is a timing chart illustrating an example of serial data transmitted from a parallel-to-serial conversion circuit to a microcomputer illustrated in FIG. 1;
FIG. 6 is a block diagram illustrating examples of circuits for detecting a voltage abnormality of other power supply systems; and
FIG. 7 is an example of a block diagram illustrating a second embodiment of the power supply system according to the present invention.

### DESCRIPTION OF EMBODIMENTS

Hereinafter, embodiments will be described with reference to the drawings. In the following description, the same reference numerals as signal names may be used for signal lines, signal terminals, signal nodes, and signal values through which signals are transmitted. The same reference numerals as voltage names may be used for voltage lines, voltage terminals, and voltage nodes to which the voltages are supplied. In the drawings, the same components or constituent elements are denoted by the same reference numerals, and a redundant description thereof may be omitted.

### (Example of Power Supply System of First Embodiment)

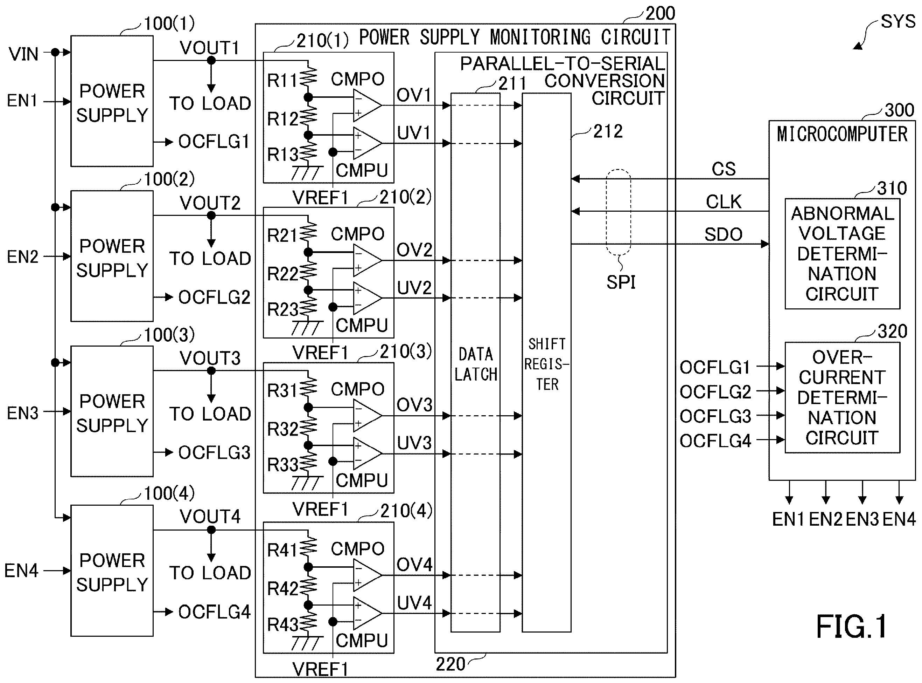

FIG. 1 is an example of a block diagram illustrating a first embodiment of a power supply system according to the present invention. A power supply system SYS illustrated in FIG. 1 generates a power supply voltage used in a servo motor encoder, a servo amplifier, a programmable logic controller (PLC), a data collection device, or the like included in a servo system, for example. The power supply system SYS may generate a plurality of types of power supply voltages used in a plurality of devices included in a system other than the servo system.

The power supply system SYS illustrated in FIG. 1 includes a plurality of power supplies 100(1), 100(2), 100(3), and 100(4), a power supply monitoring circuit 200, and a microcomputer 300. Hereinafter, the power supplies 100(1) through 100(4) may simply be referred to as power supplies 100 when describing the power supplies 100(1) through 100(4) without distinction. The power supply system SYS has functions of detecting an abnormality such as an overvoltage, an undervoltage, an overcurrent, or the like of each power supply 100, safely stopping only the power supply 100 in which the abnormality occurred, and restarting the stopped power supply 100. In FIG. 1, the power supply system SYS includes four power supplies 100, but the number of power supplies 100 is not limited to four as long as the number is two or more. The microcomputer 300 is an example of a control device (or a processor) that controls each power supply 100 of the plurality of power supplies 100.

The power supplies 100(1) through 100(4) operate during a period in which control signals EN1, EN2, EN3, and EN4 received from the microcomputer 300 have an assert level (for example, a high level), and generate voltages VOUT1, VOUT2, VOUT3, and VOUT4 using an input voltage VIN, respectively. The power supplies 100(1) through 100(4) stop operating during a period in which the control signals EN1, EN2, EN3, and EN4 received from the microcomputer 300 have a negate level (for example, a low level), and stop generating the voltages VOUT1, VOUT2, VOUT3, and VOUT4, respectively.

The voltages VOUT1 through VOUT4 are supplied to the power supply monitoring circuit 200 and to loads connected to the power supplies 100(1) through 100(4), respectively. For example, the load is a servo motor encoder, a servo amplifier, a PLC, a data collection device, or the like. Values of the voltages VOUT1 through VOUT4 may be different from each other, or may be the same as each other. Alternatively, the values of some of the voltages VOUT1 through VOUT4 may be different from each other and the values of remaining ones of the voltages VOUT1 through VOUT4 may be the same as each other.

In addition, in a case where the power supplies 100(1) through 100(4) detect an overcurrent of the current flowing through an input voltage line VIN in each of the power supplies 100, the power supplies 100(1) through 100(4) transmit overcurrent detection signals OCFLG1, OCFLG2, OCFLG3, and OCFLG4 to the microcomputer 300. Hereinafter, the voltages VOUT1, VOUT2, VOUT3, and VOUT4 may simply be referred to as voltages VOUT when describing the voltages VOUT1, VOUT2, VOUT3, and VOUT4 without distinction. In addition, the control signals EN1, EN2, EN3, and EN4 may simply be referred to as control signals EN when describing the control signals EN1, EN2, EN3, and EN4 without distinction. Moreover, the overcurrent detection signals OCFLG1, OCFLG2, OCFLG3, and OCFLG4 may simply be referred to as overcurrent detection signals OCFLG when describing the overcurrent detection signals OCFLG1, OCFLG2, OCFLG3, and OCFLG4 without distinction.

By transmitting the overcurrent detection signal OCFLG to the microcomputer 300 for each power supply 100, the microcomputer 300 can stop and restart only the power supply 100 in which the overcurrent occurred, using the control signal **EN.** Hence, it is possible to restore the power supply 100 in which the abnormality occurred from the abnormal state without stopping the entire power supply system SYS.

The power supply monitoring circuit 200 includes a plurality of abnormal voltage detection circuits 210(1), 210(2), 210(3), and 210(4) corresponding to the power supplies 100(1), 100(2), 100(3), and 100(4), respectively, and a parallel-to-serial conversion circuit 220. Hereinafter, the abnormal voltage detection circuits 210(1), 210(2), 210(3), and 210(4) may simply be referred to as abnormal voltage detection circuits 210 when describing the abnormal voltage detection circuits 210(1), 210(2), 210(3), and 210(4) without distinction. The power supply monitoring circuit 200 is an example of an abnormality transmission circuit that transmits a detection result, indicating whether or not the output voltage of each abnormal voltage detection circuit 210 of the plurality of abnormal voltage detection circuits 210 is abnormal, to the microcomputer 300 as a serial output.

The parallel-to-serial conversion circuit 220 includes a data latch 211 and a shift register 212, and is connected to the microcomputer 300 using a serial peripheral interface (SPI). The SPI is sometimes also referred to as a SPI I/F, as illustrated in FIG. **1****.** The SPI illustrated in FIG. 1 includes a chip select signal CS, a clock signal CLK, and a data signal SDO, and transmits data from the parallel-to-serial conversion circuit 220 to the microcomputer 300.

The microcomputer 300 operates as a master of the SPI, and outputs the chip select signal CS and the clock signal CLK to the parallel-to-serial conversion circuit 220. The parallel-to-serial conversion circuit 220 operates as a slave of the SPI, and outputs a data signal SDO. The data from the parallel-to-serial conversion circuit 220 to the microcomputer 300 may be transmitted using another serial interface, such as an inter-integrated circuit (I²C) interface or the like.

The abnormal voltage detection circuits 210(1) through 210(4) are mutually the same circuit, except for resistance values of built-in resistors that are mutually different among the abnormal voltage detection circuits 210(1) through 210(4). For this reason, the circuit configuration and operation of the abnormal voltage detection circuit 210(1) will be described below. In a case where the plurality of abnormal voltage detection circuits 210 receive the output voltage VOUT having the same value, the resistance values of three built-in resistors may be the same among the abnormal voltage detection circuits 210, respectively.

The abnormal voltage detection circuit 210(1) includes resistors R11, R12, and R13 connected in series between an output voltage line VOUT1 and a ground line, and comparators CMPO and CMPU. An inverting input terminal of the comparator CMPO is connected to a connection node connecting the resistors R11 and R12, and a non-inverting input terminal of the comparator CMPO is connected to a reference voltage line VREF1. A non-inverting input terminal of the comparator CMPU is connected to a connection node connecting the resistors R12 and R13, and an inverting input terminal of the comparator CMPU is connected to the reference voltage line VREF1.

In a case where a voltage at the connection node connecting the resistors R11 and R12 is higher than or equal to the reference voltage VREF1, the comparator CMPO detects that the output voltage VOUT1 is an overvoltage (first abnormality) higher than a first determination voltage, and outputs a low-level overvoltage detection signal OV1. On the other hand, in a case where the voltage at the connection node connecting the resistors R11 and R12 is lower than the reference voltage VREF1, the comparator CMPO detects that the output voltage VOUT1 is not an overvoltage, and outputs a high-level overvoltage detection signal OV1.

In a case where a voltage at the connection node connecting the resistors R12 and R13 is lower than the reference voltage VREF1, the comparator CMPU detects that the output voltage VOUT1 is an undervoltage (second abnormality) lower than a second determination voltage, and outputs a low-level undervoltage detection signal UV1. The second determination voltage is lower than the first determination voltage. On the other hand, in a case where the voltage at the connection node connecting the resistors R12 and R13 is higher than or equal to the reference voltage VREF1, the comparator CMPU detects that the output voltage VOUT1 is not an undervoltage, and outputs a high-level undervoltage detection signal UV1.

As described above, in the case where the output voltage VOUT1 is an overvoltage, the overvoltage detection signal OV1 assumes a low level and the undervoltage detection signal UV1 assumes a high level. In a case where the output voltage VOUT1 is neither an overvoltage nor an undervoltage and falls within a normal range, both the overvoltage detection signal OV1 and the undervoltage detection signal UV1 assume the high level. In the case where the output voltage VOUT1 is an undervoltage, the overvoltage detection signal OV1 assumes the high level and the undervoltage detection signal UV1 assumes the low level.

Similar to the abnormal voltage detection circuit 210(1), the abnormal voltage detection circuit 210(2) outputs a low-level overvoltage detection signal OV2 in a case where an overvoltage of the output voltage VOUT2 is detected, and outputs a low-level undervoltage detection signal UV2 in a case where an undervoltage of the output voltage VOUT2 is detected. The abnormal voltage detection circuit 210(3) outputs a low-level overvoltage detection signal OV3 in a case where an overvoltage of the output voltage VOUT3 is detected, and outputs a low-level undervoltage detection signal UV3 in a case where an undervoltage of the output voltage VOUT3 is detected. The abnormal voltage detection circuit 210(4) outputs a low-level overvoltage detection signal OV4 in a case where an overvoltage of the output voltage VOUT4 is detected, and outputs a low-level undervoltage detection signal UV4 in a case where an undervoltage of the output voltage VOUT4 is detected.

As described above, each abnormal voltage detection circuit 210 can individually detect the overvoltage and the undervoltage of the output voltage VOUT of the corresponding power supply 100, and can notify the microcomputer 300 of the detection result.

The data latch 211 of the parallel-to-serial conversion circuit 220 latches logic values of the overvoltage detection signals OV1 through OV4 and the undervoltage detection signals UV1 through UV4 received in parallel from the plurality of abnormal voltage detection circuits 210, and stores the latched logic values in the shift register 212 in parallel. Hereinafter, data indicating the logic values of the overvoltage detection signals OV1 through OV4 latched by the data latch 211 are also referred to as data OV1 through OV4. Data indicating the logical values of the undervoltage detection signals UV1 through UV4 latched by the data latch 211 are also referred to as data UV1 through UV4. Each of the data OV1 through OV4 is an example of first data indicating whether or not the output voltage VOUT is an overvoltage, and each of the data UV1 through UV4 is an example of second data indicating whether or not the output voltage VOUT is an undervoltage.

The shift register 212 sequentially outputs the data OV1 through OV4 and the data UV1 through UV4 held therein in series to the microcomputer 300 in synchronism with the clock signal CLK during a period in which the chip select signal CS has an assert level. Accordingly, even in a case where the number of power supplies 100 provided in the power supply system SYS is large, the plurality of data OV indicating whether or not each of the output voltages VOUT is an overvoltage and the plurality of data UV indicating whether or not each of the output voltages VOUT is an undervoltage can be transmitted to the microcomputer 300 using a minimum number of signal lines. The shift register 212 is an example of a data converter that converts the data OV1 through OV4 and the data UV1 through UV4 latched by the data latch 211 into serial data (or a serial signal).

Because an increase in the number of signal lines can be minimized, an increase in the size of a system board on which the power supply 100, the power supply monitoring circuit 200, and the microcomputer 300 are mounted can be suppressed, for example. Hence, it is possible to suppress an increase in the circuit scale of the power supply system SYS and to suppress an increase in the cost of the power supply system SYS.

The microcomputer 300 controls operations of the plurality of power supplies 100, and controls the transfer of the data OV1 through OV4 and the data UV1 through UV4 from the power supply monitoring circuit 200. The microcomputer 300 receives the overcurrent detection signal OCFLG from each power supply 100 of the plurality of power supplies 100. The microcomputer 300 includes an abnormal voltage determination circuit 310 and an overcurrent determination circuit 320.

The abnormal voltage determination circuit 310 determines whether the output voltages VOUT1 through VOUT 4 are overvoltages or undervoltages, based on the logical values of the data OV1 through OV4 and the data UV1 through UV4 and the output voltages VOUT1 through VOUT4 sequentially received from the parallel-to-serial conversion circuit 220 via the data signal line SDO. That is, the abnormal voltage determination circuit 310 detects the occurrence of the overvoltage or the undervoltage for each power supply 100.

The overcurrent determination circuit 320 determines whether or not an overcurrent occurred for each power supply 100, based on the logic values of the overcurrent detection signals OCFLG1 through OCFLG4 received from each power supply 100 of the plurality of power supplies 100. That is, the overcurrent determination circuit 320 detects the occurrence of the overcurrent for each power supply 100.

In the case where the abnormal voltage determination circuit 310 detects the occurrence of the abnormal voltage (overvoltage or undervoltage) or in the case where the overcurrent determination circuit 320 detects the occurrence of the abnormal current (overcurrent), the microcomputer 300 causes the control signal EN corresponding to the power supply 100 in which the abnormality occurred to make a transition to the low level, and stops the operation of the power supply 100 in which the abnormality occurred. Thereafter, the microcomputer 300 causes the control signal EN corresponding to the power supply 100 in which the abnormality occurred to make a transition to the high level, and resumes the operation of the power supply 100 in which the abnormality occurred. The high level of the control signal EN is an example of an active state, and the low level of the control signal EN is an example of an inactive state.

Because the microcomputer 300 can restart only the power supply 100 in which the abnormality occurred after stopping only the power supply 100 in which the abnormality occurred, the microcomputer 300 can safely stop only the power supply 100 in which the abnormality occurred and recover the power supply 100 from the abnormal state without stopping the entire power supply system SYS. By individually providing the abnormal voltage determination circuit 310 corresponding to each power supply 100, it is possible to support power supply redundancy by exclusively operating two power supplies 100, for example. In this case, the exclusive operation of the power supplies 100 can easily be achieved using the control signals EN output from the microcomputer 300.

### (Outline of Power Supply)

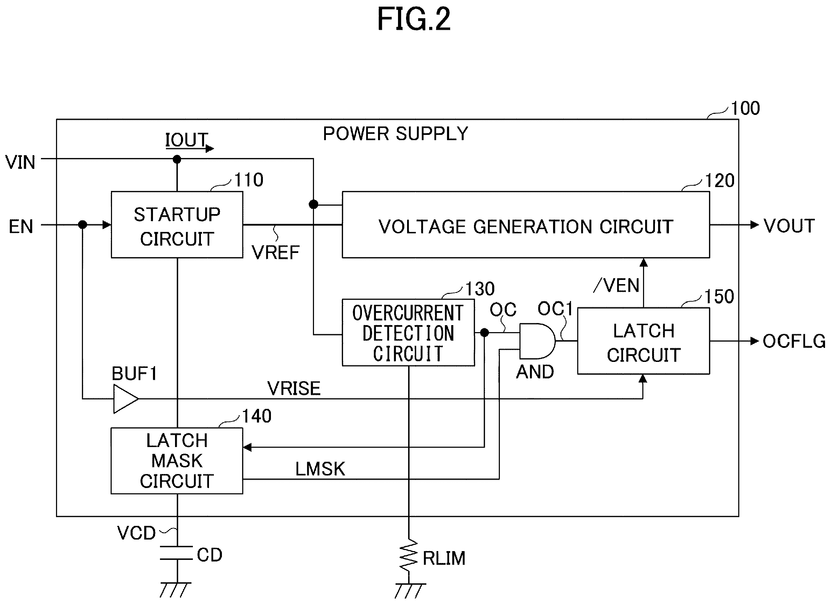

FIG. 2 is an example of a block diagram illustrating an outline of the power supply 100 illustrated in FIG. 1. FIG. 1 illustrates any one of the four power supplies 100 illustrated in FIG. 1. For example, the power supply 100 is a low drop out (LDO). The power supply 100 may be a direct current/direct current (DC/DC) converter, or an alternating current/direct current (AC/DC) converter that converts an AC voltage into a DC voltage. The power supply 100 includes a startup circuit 110, a voltage generation circuit 120, an overcurrent detection circuit 130, a latch mask circuit 140, a latch circuit 150, a buffer BUF1, and an AND circuit "AND".

The startup circuit 110 generates the reference voltage VREF and outputs the reference voltage VREF to the voltage generation circuit 120 during a high-level period of the control signal EN. The startup circuit 110 stops generating the reference voltage VREF during a low-level period of the control signal EN, and sets the reference voltage line VREF to 0 V, for example. The control signal EN is output to the latch circuit 150 via the buffer BUF1 as a control signal VRISE.

The voltage generation circuit 120 generates the output voltage VOUT from the input voltage VIN using the reference voltage VREF, during a period in which a positive reference voltage VREF and a low-level (active state) enable signal /VEN are received. The voltage generation circuit 120 stops generating the output voltage VOUT during a period in which the reference voltage VREF of 0 V or a high-level (inactive state) enable signal /VEN is received.

The overcurrent detection circuit 130 monitors, as a voltage, a current flowing from the input voltage line VIN connected to the voltage generation circuit 120 to the ground line via an external resistor RLIM, and detects whether or not the current flowing from the input voltage line VIN to the output voltage line VOUT is an overcurrent.

The overcurrent detection circuit 130 outputs a high-level overcurrent detection signal OC to the AND circuit "AND" when detecting the overcurrent, and outputs a low-level overcurrent detection signal OC to the AND circuit "AND" when not detecting an overcurrent. The overcurrent detected by the overcurrent detection circuit 130 includes an inrush current generated at the time of the startup of the power supply 100.

The latch mask circuit 140 outputs a low-level latch mask signal LMSK during a high-level period of the overcurrent detection signal OC. The latch mask circuit 140 outputs a high-level latch mask signal LMSK during a period in which an overcurrent flows through the input voltage line VIN to charge a capacitor CD, and a voltage VCD of the capacitor CD is higher than or equal to a predetermined voltage.

The AND circuit "AND" stops the output of the high-level overcurrent detection signal indicating an overcurrent to the latch circuit 150 during a low-level period of the latch mask signal LMSK. In this case, the AND circuit "AND" fixes the overcurrent detection signal OC1 to the low level. The AND circuit "AND" outputs the high-level overcurrent detection signal OC indicating the overcurrent to the latch circuit 150 as the overcurrent detection signal OC1 during a high-level period of the latch mask signal LMSK. Accordingly, only the high-level overcurrent detection signal OC indicating occurrence of the overcurrent, among the high-level overcurrent detection signals OC that are output when the overcurrent detection circuit 130 detects the overcurrent or the inrush current, can be output to the latch circuit 150 as the overcurrent detection signal OC1.

The latch circuit 150 latches the high level of the overcurrent detection signal OC1 due to the occurrence of the overcurrent during a high-level period of the control signal VRISE synchronized with the control signal EN, and outputs a high-level enable signal /VEN and a low-level overcurrent detection signal OCFLG. The latch circuit 150 outputs a low-level enable signal /VEN and a high-level overcurrent detection signal OCFLG until the latch circuit 150 receives a high-level overcurrent detection signal OC1 from the AND circuit "AND" during the high-level period of the control signal VRISE.

The latch circuit 150 continues to output the high-level enable signal /VEN that is already latched and the low-level overcurrent detection signal OCFLG, during the low-level period of the control signal VRISE. Further, in a case where the control signal VRISE assumes the high level again, the latch circuit 150 releases the latching, sets the enable signal /VEN to the low level, and sets the overcurrent detection signal OCFLG to the high level.

Accordingly, it possible to stop generating the output voltage VOUT from a time when the overcurrent is detected until the power supply 100 is restarted. As a result, it is possible to prevent the voltage generation circuit 120 from generating an abnormal output voltage VOUT after the overcurrent is detected until the microcomputer 300 negates the control signal EN, and it is possible to prevent the power supply 100 and the power supply system SYS from malfunctioning. The overcurrent detection signal OCFLG may be output from a circuit (not illustrated) that receives the enable signal /VEN.

The overcurrent detection signal OCFLG is transmitted to the microcomputer 300 illustrated in FIG. **1****.** When the microcomputer 300 receives the low-level overcurrent detection signal OCFLG, the microcomputer 300 detects that an overcurrent occurred in the power supply 100 at a transmission source of the overcurrent detection signal OCFLG. Further, the microcomputer 300 sets the high-level control signal EN being output to the power supply 100 at the transmission source of the overcurrent detection signal OCFLG to the low level, and thereafter returns the control signal EN to the high level again, thereby restarting the power supply 100 in which the overcurrent occurred.

### (Specific Example of Power Supply)

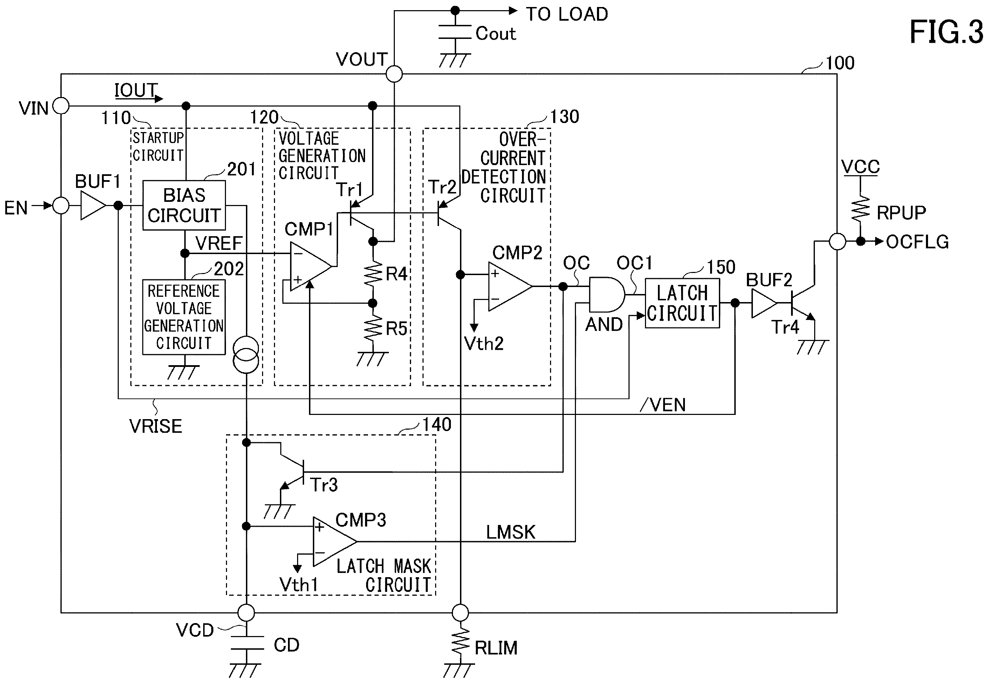

FIG. 3 is a circuit diagram illustrating a specific example of the power supply 100 illustrated in FIG. **2****.** In FIG. 3, a circular mark attached to a rectangular box indicating the power supply 100 indicates a terminal. The terminal that receives the input voltage VIN is an example of a first terminal, and the terminal that outputs the output voltage VOUT is an example of a second terminal. The power supply 100 includes a buffer BUF2 and a transistor Tr4 in addition to the circuit illustrated in FIG. **2****.** A pull-up resistor RPUP is connected between an overcurrent detection signal line OCFLG and a power line VCC of the power supply 100. The output voltage line VOUT of the power supply 100 has a load capacitance Cout.

The startup circuit 110 includes a bias circuit 201 and a reference voltage generation circuit 202. The bias circuit 201 is connected to input voltage line VIN, and activates the reference voltage generation circuit 202 in synchronism with a rising edge of the control signal EN received via the buffer BUF1, and causes the reference voltage generation circuit 202 to generate the reference voltage VREF. The bias circuit 201 causes the reference voltage generation circuit 202 to stop generating the reference voltage VREF during a low-level period of the control signal EN, and sets the reference voltage line VREF to a low level (0 V or a negative voltage). In addition, the bias circuit 201 connects the input voltage line VIN to the capacitor CD during a high-level period of the control signal EN, and charges the capacitor CD.

The voltage generation circuit 120 includes a comparator CMP1, a transistor Tr1, and resistors R4 and R5 connected in series. The comparator CMP1 has an inverting input terminal connected to the reference voltage line VREF, a non-inverting input terminal connected to a connection node connecting the resistors R4 and R5, and an output terminal connected to a base of the transistor Tr1. The transistor Tr1 is a PNP transistor having an emitter connected to the input voltage line VIN, a collector connected to the output voltage line VOUT, and the base connected to the output terminal of the comparator CMP1. The transistor Tr1 and the resistors R4 and R5 are connected in series between the input voltage line VIN and the ground line.

A voltage obtained by dividing the output voltage VOUT by the resistors R4 and R5 is supplied to the non-inverting input terminal of the comparator CMP1, and the reference voltage VREF supplied to the inverting input terminal of the comparator CMP1 is set to a voltage appearing between the resistors R4 and R5 when the output voltage VOUT assumes a target voltage.

During a period in which the comparator CMP1 receives a high-level (inactive state) enable signal /VEN, the comparator CMP1 outputs a high-level output voltage VOUT to the base of the transistor Tr1, and turns off the transistor Tr1. During a period in which the comparator CMP1 receives a low-level (active state) enable signal /VEN, the comparator CMP1 controls a base voltage of the transistor Tr1 according to a difference between the output voltage VOUT and the target voltage, and causes the transistor Tr1 to generate the output voltage VOUT.

When the voltage of the connection node connecting the resistors R4 and R5 is lower than the reference voltage VREF during the low-level period of the enable signal VEN, the voltage generation circuit 120 lowers the base voltage of the transistor Tr1 to lower an on-resistance of the transistor Tr1. That is, when the output voltage VOUT is lower than the target voltage, the voltage generation circuit 120 supplies a control voltage, which lowers the on-resistance of the transistor Tr1 as the output voltage VOUT becomes lower than the target voltage, to the base of the transistor Tr1, and performs a control to bring the output voltage VOUT close to the target voltage.

The voltage generation circuit 120 turns off the transistor Tr1 by increasing the base voltage of the transistor Tr1, during the high-level period of the enable signal /VEN, or when the voltage of the connection node connecting the resistors R4 and R5 is higher than or equal to the reference voltage VREF. That is, the voltage generation circuit 120 turns off the transistor Tr1 in the case where the overcurrent occurs and the enable signal /VEN assumes the high level, or when the output voltage VOUT is higher than or equal to the target voltage.

The overcurrent detection circuit 130 includes a transistor Tr2 and a comparator CMP2. The transistor Tr2 is a PNP transistor, and has an emitter connected to the input voltage line VIN, a collector connected to a non-inverting input terminal of the comparator CMP2 and one end of the resistor RLIM, and a base connected to the output terminal of the comparator CMP1. The other end of the resistor RLIM is connected to the ground line. The transistor Tr2 operates as a current mirror circuit together with the transistor Tr1.

The comparator CMP2 has the non-inverting input terminal connected to the collector of the transistor Tr2, an inverting input terminal connected to a threshold voltage line Vth2, and an output terminal connected to the overcurrent detection signal line OC. In a case where the voltage generated at the one end of the resistor RLIM by the current flowing through the transistor Tr2 is lower than a threshold voltage Vth2, the comparator CMP2 outputs a low-level overcurrent detection signal OC indicating no occurrence of the overcurrent.

In a case where the voltage generated at the one end of the resistor RLIM by the current flowing through the transistor Tr2 becomes higher than or equal to the threshold voltage Vth2, the comparator CMP2 outputs a high-level overcurrent detection signal OC indicating an occurrence of an overcurrent. For example, the threshold voltage Vth2 is set to a voltage slightly lower than a voltage generated at the one end of the resistor RLIM when an overcurrent flows through the transistors Tr1 and Tr2.

By using the external resistor RLIM, the current flowing through the transistors Tr1 and Tr2 when detecting the overcurrent can be suppressed to a rated current of the transistors Tr1 and Tr2 or lower, and damage to the transistors Tr1 and Tr2 can be prevented.

When an inrush current flows due to charging of the capacitor CD when starting the power supply 100, the load capacitance Cout is also charged, and thus, an inrush current also flows through the output voltage line VOUT. For this reason, the overcurrent detection circuit 130 can detect both the overcurrent and the inrush current. That is, the overcurrent detection signal OC makes a transition to the high level when the overcurrent occurs or when the inrush current occurs.

The latch mask circuit 140 includes a transistor Tr3 and a comparator CMP3. The comparator CMP3 has a non-inverting input terminal connected between the bias circuit 201 and the capacitor CD, an inverting input terminal connected to a threshold voltage line Vthl, and an output terminal connected to a latch mask signal line LMSK. In a case where the voltage VCD of the capacitor CD is lower than a threshold voltage Vthl, the comparator CMP3 outputs a low-level latch mask signal LMSK. In a case where the voltage VCD of the capacitor CD is higher than or equal to the threshold voltage Vthl, the comparator CMP3 outputs a high-level latch mask signal LMSK.

The transistor Tr3 is an NPN transistor, and has a collector connected between the bias circuit 201 and the capacitor CD, an emitter connected to the ground line, and a base connected to the overcurrent detection signal line OC. The transistor Tr3 turns on during the high-level period of the overcurrent detection signal OC, and connects a connection node connecting the bias circuit 201 and the capacitor CD to the ground line. Further, during a period in which the transistor Tr3 is on, the latch mask signal LMSK is set to the low level.

As described above with reference to FIG. 2, the AND circuit "AND" outputs, to the latch circuit 150, only the high-level overcurrent detection signal OC1 corresponding to the high-level overcurrent detection signal OC indicating the occurrence of the overcurrent, among the high-level overcurrent detection signals OC that are output when the overcurrent detection circuit 130 detects the overcurrent or the inrush current. That is, the AND circuit "AND" prevents the high level of the overcurrent detection signal OC1 corresponding to the overcurrent detection signal OC that makes a transition to the high level with the occurrence of the inrush current from being output to the latch circuit 150.

As described above with reference to FIG. 2, the latching operation of the latch circuit 150 is enabled during the high-level period of the control signal VRISE, and the latch circuit 150 latches the high level of the overcurrent detection signal OC1 received when the overcurrent occurs, and outputs the high-level enable signal /VEN. The overcurrent detection signal OCFLG that makes the transition to the low level when the overcurrent occurs is generated by the buffer BUF2 and the transistor Tr4.

The latch circuit 150 holds the latched high level until the control signal EN (that is, the control signal VRISE) next assumes the high level. Accordingly, the enable signal /VEN can be maintained at the high level (negate level) until the power supply 100 in which the overcurrent occurred is restarted by the microcomputer 300 that receives the low-level overcurrent detection signal OCFLG, and the generation of the output voltage VOUT by the voltage generation circuit 120 can be stopped.

The buffer BUF2 is connected between the output of the latch circuit 150 and the base of the transistor Tr4, and outputs a signal having the same logic value as the enable signal /VEN output from the latch circuit 150 to the base of the transistor Tr4. The transistor Tr4 is an NPN transistor having a collector connected to the overcurrent detection signal line OCFLG, an emitter connected to the ground line, and the base connected to the output of the buffer BUF2.

The transistor Tr4 turns on during the period in which the enable signal /VEN has a high level due to the occurrence of an overcurrent (excluding an inrush current), and sets the overcurrent detection signal OCFLG to a low level. The transistor Tr4 turns off during a period in which the enable signal /VEN has a low level due to no occurrence of the overcurrent. When the transistor Tr4 is off, the collector of the transistor Tr4 is in a floating state, and the overcurrent detection signal OCFLG is set to a high level by the pull-up resistor RPUP.

With the circuit illustrated in FIG. 3, the power supply 100 can stop generating the output voltage VOUT from a time when the overcurrent is detected until the power supply 100 is restarted. In addition, the transistors Tr1 and Tr2 can be controlled to the off state by stopping a comparing operation of the comparator CMP1 by the high-level enable signal /VEN, and setting the base voltages of the transistors Tr1 and Tr2 to the high level.

As a result, after the overcurrent is detected, the microcomputer 300 negates the control signal EN, and prevent the voltage generation circuit 120 from generating an abnormal output voltage VOUT until the control signal EN assumes the high level again, and thus, the malfunction of the power supply 100 and the power supply system SYS can be prevented. Moreover, by turning off the transistors Tr1 and Tr2 when the overcurrent occurs, it is possible to prevent the overcurrent from continuously flowing through the transistors Tr1 and Tr2, and to prevent the transistors Tr1 and Tr2 from being damaged by the overcurrent.

### (Operation Example of Power Supply)

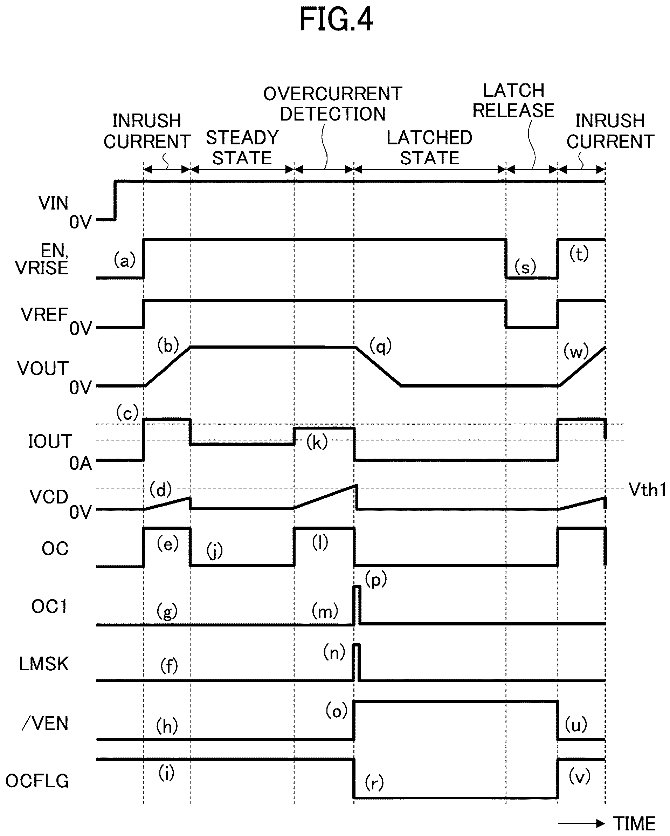

FIG. 4 is a timing chart illustrating an operation example of the power supply 100 illustrated in FIG. 3. FIG. 4 illustrates the operation of any one of the four power supplies 100 illustrated in FIG. 1. First, in an initial state before the input voltage VIN for operating the power supply 100 is supplied to the power supply 100, the control signals EN and VRISE are set to a low level, the reference voltage VREF and the output voltage VOUT are set to 0 V, an output current IOUT is set to 0 A, the voltage VCD of the capacitor CD is set to 0 V, the overcurrent detection signals OC and OC1 are set to a low level, the latch mask signal LMSK is set to a low level, the enable signal /VEN is set to a low level, and the overcurrent detection signal OCFLG is set to a high level.

After the input voltage VIN is supplied to the power supply 100, the microcomputer 300 sets the control signal EN to a high level to start the power supply 100. The control signal VRISE also makes a transition to a high level due to the high level of the control signal EN (FIG. 4 (a)).

When the startup circuit 110 generates the reference voltage VREF (not illustrated) in response to the high level of the control signal VRISE, the voltage generation circuit 120 starts operating, and the output voltage VOUT rises to a predetermined voltage (FIG. 4 (b)). When the power supply 100 is started, an inrush current for charging the capacitor CD and the load capacitance Cout flows, the output current IOUT increases, and the voltage VCD of the capacitor CD rises (FIG. 4 (c) and FIG. 4 (d)).

The overcurrent detection circuit 130 detects the inrush current as an overcurrent, and sets the overcurrent detection signal OC to a high level during a period in which the inrush current flows (FIG. 4 (e)). The latch mask circuit 140 maintains the latch mask signal LMSK at the low level in response to the high-level overcurrent detection signal OC (FIG. 4 (f)).

The AND circuit "AND" maintains the output of the low-level overcurrent detection signal OC1 to the latch circuit 150 in response to the low-level latch mask signal LMSK, and prevents the transmission of the high level of the overcurrent detection signal OC to the latch circuit 150 (FIG. 4 (g)). For this reason, during the low-level period of the latch mask signal LMSK, the latch circuit 150 maintains the enable signal /VEN at the low level regardless of the logic level of the overcurrent detection signal OC (FIG. 4 (h)). Because the transistor Tr4 maintains the off state, the overcurrent detection signal OCFLG is maintained at the high level indicating no detection of the overcurrent when the inrush current occurs (FIG. 4 (i)).

When the capacitor CD and the load capacitance Cout are charged and the inrush current no longer flows, and the output current IOUT becomes small, the overcurrent is no longer detected by the overcurrent detection circuit 130, and the overcurrent detection signal OC makes a transition to the low level (FIG. 4 (j)). Further, the power supply 100 assumes a steady state in which the output voltage VOUT is generated. In the steady state, when the overcurrent detection circuit 130 detects an overcurrent of the output current IOUT, the overcurrent detection circuit 130 causes the overcurrent detection signal OC to make a transition to the high level (FIG. 4 (k) and FIG. 4 (1)).

During the low-level period of the latch mask signal LMSK, the AND circuit "AND" masks the transmission of the high level of the overcurrent detection signal OC to the latch circuit 150 (FIG. 4 (m)). When the voltage VCD rises due to the overcurrent and becomes higher than or equal to the threshold voltage Vthl, the latch mask signal LMSK makes a transition to the high level (FIG. 4 (n)). The latch circuit 150 latches the high level of the overcurrent detection signal OC1 and assumes the latching state, and outputs the high-level enable signal /VEN (FIG. 4 (o)). Accordingly, the AND circuit "AND" transmits the high level of the overcurrent detection signal OC to the latch circuit 150 as the high level of the overcurrent detection signal OC1 (FIG. 4 (p)).

The comparator CMP1 of the voltage generation circuit 120 stops the voltage comparing operation and outputs a high level in response to the high-level enable signal /VEN. As a result, the voltage generation circuit 120 stops the operation of generating the output voltage VOUT, and the output voltage VOUT gradually decreases (FIG. 4 (q)). For this reason, the microcomputer 300 can receive low-level data UV from the power supply monitoring circuit 200 illustrated in FIG. 1, and detect the occurrence of the overcurrent as an undervoltage abnormality of output voltage VOUT.

The transistor Tr4 turns on in response to receiving the high-level enable signal /VEN via the buffer BUF2, and sets the overcurrent detection signal OCFLG to the low level indicating the occurrence of the overcurrent (FIG. 4 (r)). The low level of the overcurrent detection signal OCFLG is supplied to the overcurrent determination circuit 320 of the microcomputer 300.

The overcurrent determination circuit 320 detects the power supply 100 in which the overcurrent occurred, based on the low level of the overcurrent detection signal OCFLG. Further, the microcomputer 300 sets the control signal EN output to the power supply 100 that is the output source of the low-level overcurrent detection signal OCFLG to the low level, and stops the operation of the power supply 100 in which the overcurrent occurred (FIG. 4 (s)).

After a predetermined time elapses after setting the control signal EN to the low level, the microcomputer 300 sets the control signal EN to the high level, thereby restarting the power supply 100 in which the overcurrent occurred (FIG. 4 (t)). The power supply 100, which receives the high-level control signal EN, sets the control signal VRISE to the high level. The latch circuit 150 is initialized by the high-level control signal VRISE, and sets the enable signal /VEN to the low level (FIG. 4 (u)). The transistor Tr4 sets the overcurrent detection signal OCFLG to the high level in response to the high-level enable signal /VEN (FIG. 4 (v)).

The voltage generation circuit 120 starts the operation of generating the output voltage VOUT, and the output voltage VOUT rises (FIG. 4 (w)). Further, the inrush current flows due to the rise of the output voltage VOUT, and the power supply 100 operates in the same manner as the first half of FIG. 4.

### (Transmission Timing Chart of Serial Data)

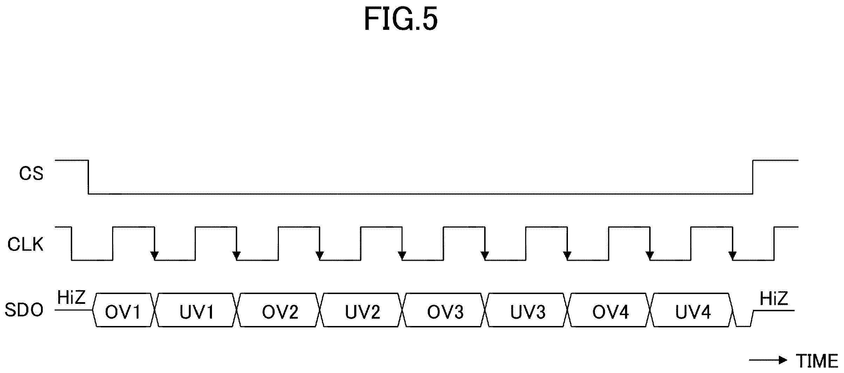

FIG. 5 is a timing chart illustrating an example of serial data transmitted from the parallel-to-serial conversion circuit 220 to the microcomputer 300 illustrated in FIG. 1. FIG. 5 illustrates an example in which the parallel-to-serial conversion circuit 220 transmits data in synchronism with a falling edge of a chip select signal CS and a falling edge of the clock signal CLK during an active period of the low-active chip select signal CS, and the microcomputer 300 receives the data in synchronism with a rising edge of the clock signal CLK.

In a case where the microcomputer 300 causes the parallel-to-serial conversion circuit 220 to transmit serial data, the microcomputer 300 causes the chip select signal CS to make a transition to a low level during the low-level period of the clock signal CLK, and thereafter outputs the clock signal CLK to the parallel-to-serial conversion circuit 220.

The parallel-to-serial conversion circuit 220 outputs first serial data to the data signal line SDO in synchronism with the falling edge of the chip select signal CS. Thereafter, the parallel-to-serial conversion circuit 220 sequentially outputs the serial data to the data signal line SDO in synchronism with the falling edge of the clock signal CLK during the low-level period of the chip select signal CS. In the example illustrated in FIG. 5, the data OV1, UV1, OV2, UV2, OV3, UV3, OV4, and UV4 are sequentially transmitted to the microcomputer 300, but the output order of the data is not limited to that of the example illustrated in FIG. 5.

By determining the order of transmission of the data OV1 through OV4 and the data UV1 through UV4 in advance between the power supply monitoring circuit 200 and the microcomputer 300, the microcomputer 300 can recognize the power supply 100 in which the overvoltage or the undervoltage occurs, based on the received serial data. In FIG. 5, the microcomputer 300 can receive 8-bit data OV1 through OV4 and UV1 through UV4, using three signal lines CS, CLK, and SDO. In a case where eight power supplies 100 are provided in the power supply system SYS, 16-bit data OV1 through OV8 and UV1 through UV8 are transmitted using three signal lines CS, CLK, and SDO.

### (Examples of Other Power Supply Systems)

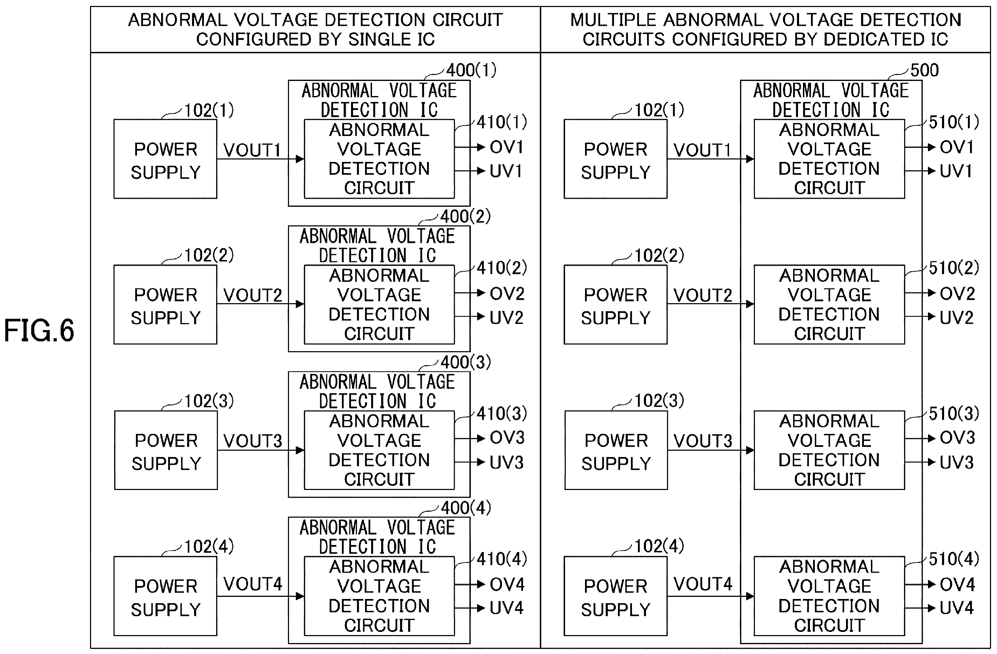

FIG. 6 is a block diagram illustrating examples of circuits for detecting a voltage abnormality of other power supply systems. In FIG. 6, those components or constituent elements that are the same as those illustrated in FIG. 1 are designated by the same reference numerals, and a detailed description thereof will be omitted. For example, each power supply 102 is an LDO. The power supply systems illustrated in FIG. 6 correspond to comparative examples of the present invention.

In a case where the abnormal voltage detection circuit 410 is configured by a single abnormal voltage detection integrated circuit (IC) 400 as illustrated in a left half portion of FIG. 6, an abnormal voltage detection IC 400 is required for each power supply 100, and the number of ICs to be used increases. In addition, because the abnormal voltage detection IC 400 outputs the data OV and UV indicating whether or not the voltage is abnormal, eight signal lines are required to transmit the data OV and UV to the microcomputer 300 in a case where four power supplies 100 are provided. For this reason, there is a problem that the size of a board implemented in the power supply system increases due to an increase in the number of ICs and an increase in the number of signal lines.

Even in a case where a plurality of abnormal voltage detection circuits 510 is configured by a dedicated abnormal voltage detection IC 500 as illustrated in a right half portion of FIG. 6, it is necessary to output the data OV and UV indicating whether or not the voltage is abnormal from each abnormal voltage detection circuit 510, and eight signal lines are required to transmit the data OV and UV to the microcomputer 300. For this reason, the number of pins of the abnormal voltage detection IC 500 increases, and there is a problem that the size of a board on which the abnormal voltage detection IC 400 is to be mounted increases.

Consequently, it is difficult to reduce the size of the power supply system in each of the single IC configuration illustrated in the left half portion of FIG. 6 and the dedicated IC configuration illustrated in the right half portion of FIG. **6****.**

For example, protection methods for protecting the power supply from an overcurrent include methods of using foldback characteristics, drooping characteristics, or thermal protection circuits. According to the method of using the foldback characteristics, the transistor is turned off by utilizing the characteristics in which the output voltage and the output current decrease when an overcurrent occurs in the output current. According to the method of using the drooping characteristics, the transistor is turned off by utilizing the characteristics in which the output voltage is lowered while maintaining the output current when an overcurrent occurs in the output current. The method of using the thermal protection circuit detects heat generated by an overcurrent and turns off the transistor.

In the protection methods using the foldback characteristics and the drooping characteristics, there are cases where the transistor is repeatedly turned on by the protection function and the transistor is repeatedly turned on by disabling the protection function, and there is a problem in that the power supply system cannot be stopped in a normal manner. In addition, because the protection methods using the foldback characteristics and the drooping characteristics employ an open control, there is a risk of breaking the transistor when an output current exceeding a rated current of the transistor flows. For this reason, in the case where the foldback characteristics or the drooping characteristics are used for the protection function against the overcurrent, it is necessary to provide a thermal protection circuit in the power supply.

As described above, in the first embodiment, even in the case where the number of power supplies 100 provided in the power supply system SYS is large, the plurality of data OV indicating whether or not each of the output voltages VOUT is an overvoltage and the plurality of data UV indicating whether or not each of the output voltages VOUT is an undervoltage can be transmitted to the microcomputer 300 using a minimum number of signal lines.

Because an increase in the number of signal lines can be suppressed, an increase in the size of a system board on which the power supply 100, the power supply monitoring circuit 200, and the microcomputer 300 are provided can be suppressed, for example. Hence, it is possible to suppress an increase in the circuit scale of the power supply system SYS and to suppress an increase in the cost of the system.

By transmitting the overcurrent detection signal OCFLG to the microcomputer 300 for each power supply 100, the microcomputer 300 by itself can stop and restart only the power supply 100 in which the overcurrent occurred, using the control signal **EN.** Hence, it is possible to safely stop only the power supply 100 in which the abnormality occurred and restore the power supply system SYS from the abnormal state, without stopping the entire power supply system **SYS.** As a result, it is possible to implement the function of detecting the power supply abnormality of the plurality of power supplies 100 and the function of safely stopping the power supply 100 in which the abnormality occurred, while suppressing an increase in the circuit scale.

By individually providing the abnormal voltage determination circuit 310 corresponding to each power supply 100, it is possible to support power supply redundancy by exclusively operating two power supplies 100, for example. In this case, the exclusive operation of the power supplies 100 can easily be achieved using the control signals EN output from the microcomputer 300.

The power supply 100 includes a latch circuit 150 that negates the enable signal /VEN to a high level when the microcomputer 300 asserts the control signal EN to a high level, and maintains the negated state of the enable signal /VEN until the control signal EN is asserted again when an overcurrent is detected. Accordingly, it is possible to stop generating the output voltage VOUT from a time when the overcurrent is detected until the power supply 100 is restarted. Further, the transistor Tr1 can be turned off by controlling the comparator CMP1 with the enable signal /VEN to set the base voltage of the transistor Tr1 to the high level.

As a result, it is possible to prevent the voltage generation circuit 120 from generating an abnormal output voltage VOUT after detecting the overcurrent until the microcomputer 300 negates the control signal EN, and it is possible to prevent the power supply 100 and the power supply system SYS from malfunctioning. In addition, it is possible to prevent the overcurrent from continuously flowing through the transistors Tr1 and Tr2, and to prevent the transistors Tr1 and Tr2 from being damaged by the overcurrent.

By providing the abnormal voltage detection circuit 210 in the power supply monitoring circuit 200 in correspondence with each power supply 100, it is possible to individually detect the overvoltage and the undervoltage of the output voltage VOUT of the corresponding power supply 100, and to notify the microcomputer 300 of the detection result. Further, the data OV indicating whether or not an overvoltage abnormality occurred and the data UV indicating whether or not an undervoltage abnormality occurred can be transmitted to the microcomputer 300 as serial data using the parallel-to-serial conversion circuit 220 for each power supply 100.

### (Example of Power Supply System of Second Embodiment)

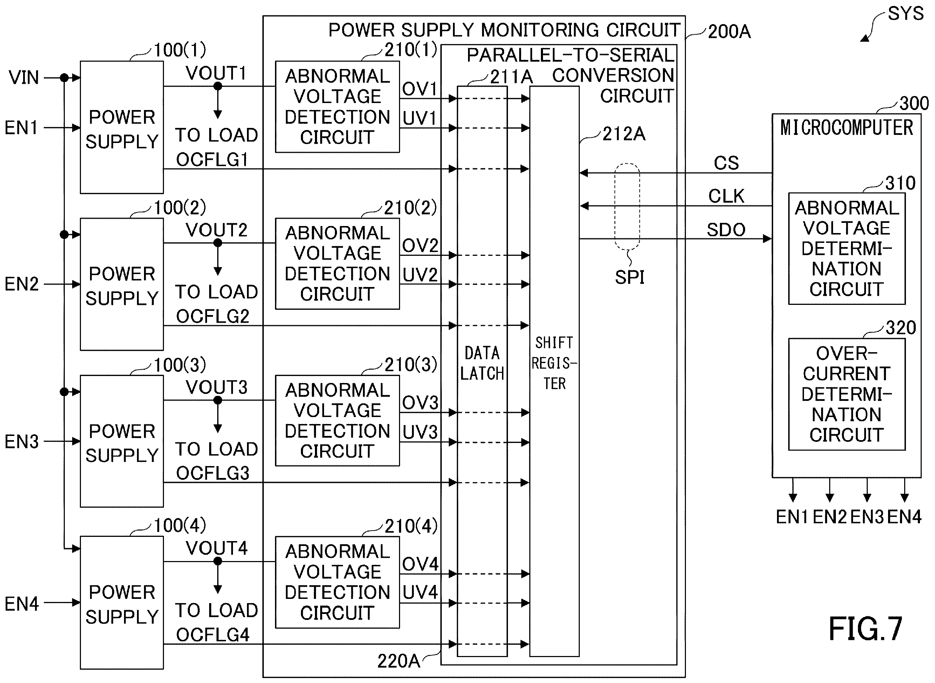

FIG. 7 is an example of a block diagram illustrating a second embodiment of the power supply system according to the present invention. In FIG. 7, those components or constituent elements that are the same as those illustrated in FIG. 1 are designated by the same reference numerals, and a detailed description thereof will be omitted. The power supply system SYS illustrated in FIG. 7 has the same configuration as the power supply system SYS illustrated in FIG. 1, except that the power supply system SYS has a power supply monitoring circuit 200A in place of the power supply monitoring circuit 200. The power supply monitoring circuit 200A includes a parallel-to-serial conversion circuit 220A in place of the parallel-to-serial conversion circuit 220 illustrated in FIG. **1****.** The parallel-to-serial conversion circuit 220A includes a data latch 211A and a shift register 212A.

In this embodiment, the overcurrent detection signals OCFLG output from each of the power supplies 100 are transmitted to the microcomputer 300 via the parallel-to-serial conversion circuit 220A as serial data. For this reason, the data latch 211A includes latches for logic values of the overcurrent detection signals OCFLG1 through OCFLG4, in addition to the latches for the data OV1 through OV4 and UV1 through UV4. The shift register 212A has a register size capable of simultaneously holding the logical values of the data OV1 through OV4 and UV1 through UV4 and the logical values of the overcurrent detection signals OCFLG1 through OCFLG4.

In the second embodiment, the overcurrent detection signals OCFLG1 through OCFLG4 do not have to be transmitted to the microcomputer 300 via interconnects formed on a system board on which the power supply 100, the power supply monitoring circuit 200A, and the microcomputer 300 are mounted, for example. For this reason, it is possible to further suppress an increase in the size of the system board when compared to the first embodiment. As a result, it is possible to further suppress an increase in the circuit scale of the power supply system SYS and to further suppress an increase in the cost of the system.

The microcomputer 300 can receive the overcurrent detection signals OCFLG1 through OCFLG4 via the data signal line SDO, without using a general-purpose input/output port, for example. For this reason, a microcomputer having a smaller number of general-purpose input/output ports than the microcomputer 300 can be used for the power supply system SYS. In this case, an increase in the cost of the system can further be suppressed.

As described above, in the second embodiment, even in a case where the number of power supplies 100 provided in the power supply system SYS is large, the plurality of data OV indicating whether or not each of the output voltages VOUT is an overvoltage and the plurality of data UV indicating whether or not each of the output voltages VOUT is an undervoltage can be transmitted to the microcomputer 300 using a minimum number of signal lines, similar to the first embodiment.

Moreover, in the second embodiment, the logic values of the data OV1 through OV4 and UV1 through UV4 and the logic values of the overcurrent detection signals OCFLG1 through OCFLG4 can be transmitted to the microcomputer 300 as serial data using the parallel-to-serial conversion circuit 220A. Because the overcurrent detection signals OCFLG1 through OCFLG4 do not need to be transmitted to the microcomputer 300 via the interconnects formed on the system board, it is possible to further suppress an increase in the size of the system board. Hence, it is possible to further suppress an increase in the circuit scale of the power supply system SYS, and to further suppress an increase in the cost of the system.

According to an aspect of the present disclosure, it is possible to provide a function of detecting a power supply abnormality of a plurality of power supplies and a function of safely stopping a power supply in which an abnormality occurred, while suppressing an increase in the circuit scale.

Although the embodiments are numbered with, for example, "first," or "second," the ordinal numbers do not imply priorities of the embodiments. Many other variations and modifications will be apparent to those skilled in the art.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention have been described in detail, it should be understood that the various changes, substitutions, and alterations could be made hereto without departing from the spirit and scope of the invention.

## Claims

1. A power supply system (SYS) comprising:
a plurality of power supplies (100) configured to generate output voltages in response to a plurality of control signals in an active state, respectively;
a control device (300) configured to output the plurality of control signals to the plurality of power supplies, respectively; and
an abnormality transmission circuit (200, 200A) including a plurality of abnormal voltage detection circuits (210) provided in correspondence with the plurality of power supplies, and configured to detect whether or not the output voltages generated by the plurality of power supplies include an abnormality, wherein:
the abnormality transmission circuit (200, 200A) transmits a plurality of detection results of the plurality of abnormal voltage detection circuits to the control device as serial data, and
the control device (300) outputs a control signal in an inactive state to a power supply in which the abnormality is detected among the plurality of power supplies, based on the plurality of detection results, to stop an operation of the power supply, and thereafter output a control signal in an active state to the power supply.

2. The power supply system (SYS) as claimed in claim 1, wherein each power supply (100) of the plurality of power supplies (100) includes:
a voltage generation circuit (120) configured to generate an output voltage based on an input voltage received at a first terminal, and output the generated output voltage to a second terminal, and
an overcurrent detection circuit (130) configured to detect whether or not a current flowing from the first terminal to the second terminal is an overcurrent, and transmit a detection result to the control device (300),
wherein the control device (300) outputs the control signal in the inactive state to the power supply in which the abnormality is detected among the plurality of power supplies, based on the detection result of the overcurrent detection circuit, to stop the operation of the power supply, and thereafter output the control signal in the active state to the power supply.

3. The power supply system (SYS) as claimed in claim 2, wherein the abnormality transmission circuit (200, 200A) transmits the plurality of detection results of the abnormal voltage detection circuit (210) and the detection result of the overcurrent detection circuit (130) of each power supply (100) of the plurality of power supplies (100) to the control device (300) as serial data.

4. The power supply system (SYS) as claimed in claim 2 or 3, wherein each power supply (100) of the plurality of power supplies (100) includes:
a latch circuit (150) configured to output an enable signal in an active state in response to a transition of a corresponding control signal among the plurality of control signals to an active state, and to set the enable signal to an invalid state in response to an overcurrent detection by the overcurrent detection circuit (130) until the corresponding control signal again makes a transition to the active state,
wherein the voltage generation circuit (120) generates the output voltage when the enable signal is in the active state, and stops generating the output voltage when the enable signal is in the inactive state.

5. The power supply system (SYS) as claimed in claim 4, wherein the voltage generation circuit (120) includes:
a transistor (Tr1) coupled between the first terminal and the second terminal, and
a comparator (CMP1) configured to control a base voltage of the transistor according to a difference between the input voltage and the output voltage,
the comparator (CMP1), in a case where the enable signal is in the active state, supplies a control voltage for turning off the transistor to a base of the transistor when the output voltage is higher than or equal to a target voltage,
the comparator (CMP1), in the case where the enable signal is in the active state, supplies a control voltage, which lowers an on-resistance of the transistor as the output voltage becomes lower than the target voltage, to the base of the transistor, and
the comparator (CMP1), in a case where the enable signal is in the inactive state, supplies a control voltage for turning off the transistor to the base of the transistor.

6. The power supply system (SYS) as claimed in any one of claims 1 to 5, wherein each abnormal voltage detection circuit (210) of the plurality of abnormal voltage detection circuits (210) detects a first abnormality when an output voltage generated by a corresponding power supply among the plurality of power supplies (100) is higher than a first determination voltage, and detects a second abnormality when the corresponding power supply generates an output voltage is lower than a second determination voltage that is lower than the first determination voltage.

7. The power supply system (SYS) as claimed in any one of claims 1 to 5, wherein:
the abnormality transmission circuit (200, 200A) includes a parallel-to-serial conversion circuit (220, 220A), and
the parallel-to-serial conversion circuit (220, 220A) includes:
a data latch (211, 211A) configured to latch data indicating a plurality of the detection results in parallel, and
a data converter (212, 212A) configured to convert the data latched by the data latch and indicating the plurality of detection results into serial data.
